# EUROPÄISCHE PATENTSCHRIFT

(11) **EP 1 303 432 B1**
(45) Veröffentlichungstag und Bekanntmachung des Hinweises auf die Patenterteilung: **08.07.2009**
(21) Anmeldenummer: 01969450.4
(22) Anmeldetag: 20.07.2001
(51) Int. Cl.: B60T 7/12, B60T 7/04

(54) **VORRICHTUNG UND VERFAHREN ZUR EINSTELLUNG EINER SOLLVERZÖGERUNG EINES FAHRZEUGES**
DEVICE AND METHOD FOR ADJUSTING A SETPOINT DECELERATION OF A VEHICLE
DISPOSITIF ET PROCEDE PERMETTANT DE REGLER L'ACCELERATION THEORIQUE D'UN VEHICULE

(30) Priorität: 26.07.2000 DE 10036337
(43) Veröffentlichungstag der Anmeldung: 23.04.2003
(73) Patentinhaber: Bayerische Motoren Werke Aktiengesellschaft, 80809 München (DE)
(72) Erfinder: MÜLLER, Jan-Erik, 85737 Ismaning (DE); TOELGE, Thomas, 80993 München (DE)
(86) Internationale Anmeldenummer: PCT/EP2001/008393
(87) Internationale Veröffentlichungsnummer: WO 2002/008035

(56) Entgegenhaltungen:
- EP-A- 0 894 684
- DE-A- 19 713 715
- DE-U- 9 320 790
- GB-A- 2 330 185
- US-A- 5 924 508

## Beschreibung

Die Erfindung betrifft eine Vorrichtung und ein Verfahren zur Einstellung einer Sollverzögerung eines Fahrzeuges bei nicht betätigtem Fahr- und Bremspedal.

Bei Fahrzeugen, insbesondere PKW und LKW, dient das Fahrpedal und das Bremspedal zum Beschleunigen eines Fahrzeuges und Halten der Fahrgeschwindigkeit bzw. zum Verzögern des Fahrzeuges. In bestimmten Verkehrssituationen ist der Fahrer gezwungen, Fahr- und Bremspedal im ständigen Wechsel zu bedienen. Dies gilt insbesondere im Kolonnenverkehr, insbesondere auf Autobahnen, wo es zu einem sogenannten "Ziehharmonika-Effekt" kommen kann. Wenn der Fahrer ständig den rechten Fuß zwischen Fahr- und Bremspedal umsetzen muß, ist dies unkomfortabel und ermüdend. Fahrer von Automatikfahrzeugen verleitet eine solche Verkehrssituation zum sogenannten "Zweifußfahren", d.h. der rechte Fuß steht auf dem Fahrpedal, während der linke Fuß auf dem Bremspedal steht. Dies kann zu einer dauerhaften Bremsbetätigung und einem damit einhergehenden erhöhten Bremsenverschleiß und Benzinverbrauch führen, da Motor und Bremse ständig gegeneinander arbeiten.

Aus der DE 197 45 128 A1 ist ein Verfahren zur Bestimmung eines Auslöseschwellenwertes für einen automatischen Bremsvorgang bekannt, wobei zum Zwecke der Verkürzung des Gesamtbremsweges schon vor Betätigung des Bremspedals ein automatischer Bremsvorgang ausgelöst wird. Der Auslöseschwellenwert wird in Abhängigkeit von einer, das Fahrverhalten des Fahrers repräsentierenden Größe ermittelt.

Der vorliegenden Erfindung liegt die Aufgabe zugrunde, eine Vorrichtung und ein Verfahren bereitzustellen, die bzw. das den Komfort und die Sicherheit beim Führen eines Fahrzeuges verbessert.

Diese Aufgabe wird mit den Merkmalen der Patentansprüche gelöst.

Die Erfindung geht von dem Grundgedanken aus, die Fahrgeschwindigkeit eines Fahrzeuges durch Betätigen bzw. Lösen des Fahrpedals zu steuern, wobei mit Hilfe einer Bedieneinrichtung eine gewünschte Sollverzögerung einstellbar ist, mit der beim Lösen des Fahrpedals das Fahrzeug gebremst wird. Diese einstellbare Sollverzögerung ist vorzugsweise größer als die bei Fahrzeugen auftretende Ei - genverzögerung, die beim Lösen des Fahrpedals bzw. der Gaswegnahme dadurch auftritt, daß der Motor keine Antriebsleistung abgibt. Dies gilt sowohl für Fahrzeuge mit Schaltgetriebe wie für Automatikfahrzeuge, die nur ein geringes Schleppmoment bei Gaswegnahme, d.h: eine geringe Eigenverzögerung aufweisen.

Die Erfindung ist insbesondere verwendbar in Kombination mit vorhandenen Bremssystemen, auch in Kombination mit Einrichtungen zur Fahrgeschwindigkeitskontrolle wie Fahrgeschwindigkeitsregler und ACC. Insbesondere ist die Erfindung verwendbar in Kombination mit Fremdkraft angesteuerten Bremsanlagen, die unabhängig von der Fahrervorgabe radindividuellen Bremsdruck an allen Rädern aufbauen können, z.B. DSC. Die Erfindung ist außerdem verwendbar bei Bremssystemen mit automatischem Bremseneingriff mittels Hydroaggregat oder regelbarem Bremskraftverstärker, wie z.B. im ACC-Betrieb.

Die Erfindung wird nachstehend anhand von Ausführungsbeispielen und der Zeichnungen näher erläutert. Es zeigen:
- Fig. 1: eine schematische Darstellung einer bevorzugten Ausführungsform der Erfindung und
- Fig. 2: ein Ausführungsbeispiel für die Anordnung einer Bedieneinrichtung.

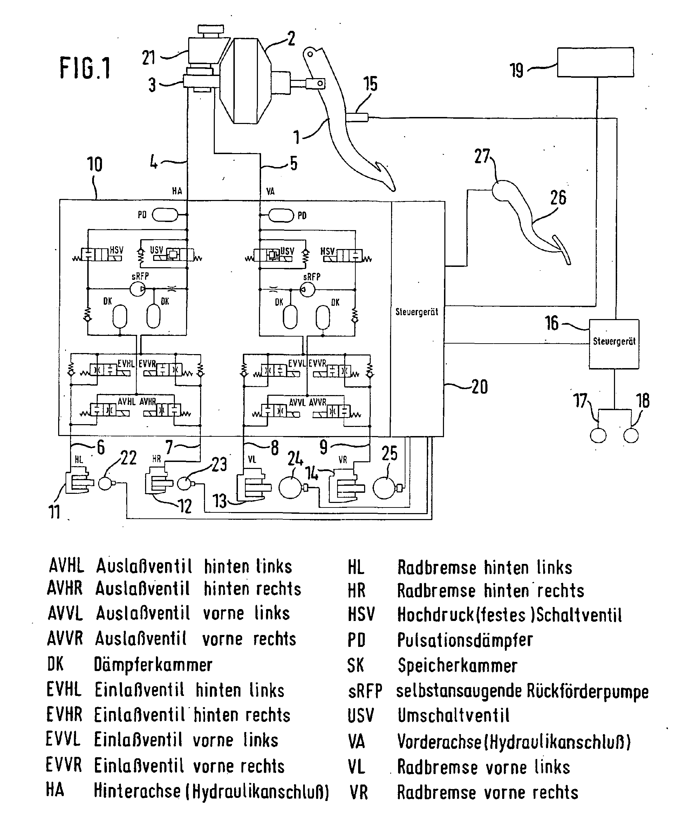

Bei der in Fig. 1 gezeigten Ausführungsform der Erfindung handelt es sich um ein bevorzugtes Anwendungsbeispiel, wobei die Erfindung in gleicher Weise bei anderen Bremssystemen einsetzbar ist. Die Ausführungsform von Fig. 1 zeigt ein hydraulisches Bremssystem mit einem Bremspedal 1, einem Bremskraftverstärker 2, einem Tandem-Hauptbremszylinder 3, einem Hydroaggregat 10 sowie Radbremsen 11, 12, 13, 14 für die vier Räder eines Fahrzeuges. Das Hydroaggregat 10 weist ein Steuergerät 20 auf. Eine Bedieneinheit 19 zur Einstellung einer gewünschten Sollverzögerung ist mit dem Steuergerät 20 verbunden. In dem gezeigten Beispiel ist das Steuergerät 20 außerdem mit einem Steuergerät 16 verbunden, das ein elektrisches Signal von einem am Bremspedal 1 angeordneten Bremslichtschalter 15 erhält und zur Ansteuerung von Bremsleuchten 17, 18 dient. Außerdem ist das Steuergerät 20 mit Raddrehzahlfühlern 22, 23, 24, 25 verbunden, die die Drehzahl der einzelnen Räder erfassen.

Bei der fahrerbetätigten Bremsung wird mittels des Bremspedals 1 unter Inanspruchnahme der Unterstützungsfunktion des Bremskraftverstärkers 2 Kraft auf den Tandem-Hauptbremszylinder 3 ausgeübt. Dadurch wird im Tandem-Hauptbremszylinder 3 ein Druck erzeugt, der sich über Bremsleitungen 4, 5, 6, 7, 8, 9 durch das Hydroaggregat 10 hindurch bis zu den Radbremsen 11, 12, 13, 14 fortpflanzt. Mit diesem Bremsdruck stellt der Fahrer seine gewünschte Fahrzeugverzögerung ein. Die Bewegung des Bremspedals führt zur Generierung eines elektrischen Signals im Bremslichtschalter 15, das entweder direkt oder über ein zwischengeschaltetes Steuergerät 16 die Bremsleuchten 17, 18 ansteuert.

In bestimmten Verkehrssituationen ist der Fahrer gezwungen, Fahr- und Bremspedal im ständigen Wechsel zu bedienen. In solchen Fällen kann der Fahrer durch die Bedieneinheit 19 entlastet werden, die es ihm erlaubt, nach Lösen des Fahrpedals eine über die Eigenverzögerung des Fahrzeugs hinausgehende Bremswirkung ohne Betätigung des Bremspedals einzustellen. Analog der Funktionalität eines automatischen Bremseingriffs für ACC kann der Bremseneingriff mittels eines geeigneten Hydroaggregats 10 erfolgen: Das von der Bedieneinheit 19 abgegebene elektrische Signal wird vom Steuergerät 20 des Hydroaggregats 10 erfaßt und in einen Verzögerungs- bzw. Drucksollwert umgewandelt. Das Hydroaggregat 10 saugt Bremsflüssigkeit aus einem Ausgleichsbehälter 21 an und baut den benötigten Bremsdruck in den Radbremsen 11, 12, 13, 14 auf, bis die Ist-Verzögerung dem Sollwert bzw. dem Fahrerwunsch entspricht. Die Höhe der Fahrzeugverzögerung kann aus den Signalen der Raddrehzahlfühler 22, 23, 24, 25 abgeleitet werden. Alternativ kann die Ist-Verzögerung mittels eines Längsbeschleunigungssensors (nicht dargestellt) erfasst werden. Die sich einstellenden Radbremsdrücke werden entweder mittels geeigneter Sensorik direkt gemessen oder über ein Hydraulikmodell anhand der Ansteuerzeiten der im Hydroaggregat 10 verbauten Ventile und Rückförderpumpe abgeschätzt.

Die nach ergonomischen Gesichtspunkten gestaltete Bedieneinheit ist so zu positionieren, daß sie eine intuitive, ermüdungsfreie Bedienung durch den Fahrer ohne Zwang zur Blickzuwendung erlaubt. Jede Betätigung durch den Fahrer führt zu einer Ansteuerung der Bremsleuchten 17, 18, gegebenenfalls unter Zwischenschaltung eines separaten Steuergerätes 16.

Die erfindungsgemäße Bedieneinheit 19 steht in einer Wirkverbindung mit dem Fahrpedal 26, wodurch die Sollverzögerung und der entsprechende überlagerte Hydraulikeingriff zum Betätigen der Bremsen erst einsetzt, wenn der Fahrer das Fahrpedal löst, d.h., wenn das Fahrpedal nicht mehr betätigt wird und in die Grundstellung zurückgekehrt ist. Die Fahrpedalposition wird mittels eines Pedalwertgebers 27 erkannt und das jeweilige Signal an das Steuergerät 20 ausgegeben.

Der überlagerte Hydraulikeingriff wird beendet, sobald der Fahrer wieder das Fahrpedal betätigt oder sobald der Fahrer das Bremspedal betätigt. Ebenso wird der Hydraulikeingriff beendet, wenn die Bedieneinheit 19 nicht mehr betätigt wird.

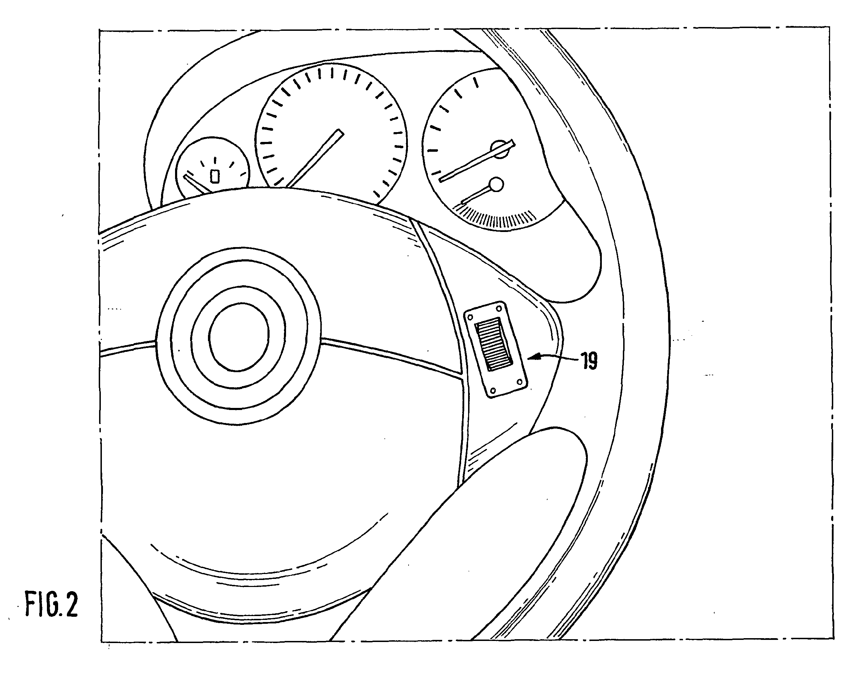

In Fig. 2 ist ein bevorzugtes Ausführungsbeispiel gezeigt, bei der die Bedieneinheit 19 in Form eines Rändelrads am Fahrzeuglenkrad derart angeordnet ist, daß eine Betätigung mit dem Daumen möglich ist. Diese Anordnung hat den Vorteil, daß eine Umgreifbewegung mit der Hand nicht erforderlich ist und die Bedienung ohne Blickzuwendung möglich ist. Dieses Rändelrad ist selbstrückstellend ausgeführt, d.h., sobald der Daumen vom Rändelrad gelöst wird, stellt sich dieses sofort selbständig zurück und der überlagerte Hydraulikeingriff wird beendet.

Die Selbstrückstellung des Rändelrads erfolgt beispielsweise über eine integrierte Federeinrichtung, d.h., beim Betätigen der Bedieneinheit wird eine Federspannung aufgebaut, die das Rändelrad beim Loslassen in die Grundstellung zurückstellt.

Alternativ kann die Bedieneinheit 19 in Form eines Lenkstockhebels oder einer Sensorfläche, die vorzugsweise ein druckabhängiges Signal ausgibt, ausgestaltet sein.

Die vorliegende Erfindung ist erweiterbar durch folgende Änderungen bzw. Ergänzungen. Beispielsweise kann die Sollverzögerung auf einen sogenannten Komfort-Bremsbereich beschränkt werden, der aus ACC-Systemen bekannt ist.

Das Bremssystem kann mit einer Druckhaltefunktion im Stillstand des Fahrzeugs ausgerüstet werden, wobei vorzugsweise kurz vor einem Fahrzeugstillstand die Verzögerungsregelung auf eine Druckregelung umgestellt wird. Zusätzlich kann der Radbremsdruck im Stillstand eingesperrt werden, solange die Bedieneinheit betätigt ist. Dies hat insbesondere den Vorteil, daß bei Automatikfahrzeugen bei noch betätigter Bedieneinheit das Fahrzeug nicht anrollt.

In einer bevorzugten Ausführungsform der Erfindung wird mit der Bedieneinheit nicht nur eine konstante Sollverzögerung eingestellt, sondern die Bremsung erfolgt abhängig von der Fahrzeuggeschwindigkeit oder der Querbeschleunigung und der Geschwindigkeit, mit der die Bedieneinheit betätigt wird, mit einer gewünschten Dynamik bzw. Progression der Druckaufbaukurve.

Weiterhin bevorzugt weist das System einen Lernalgorhithmus auf, der eine fahrzeugadaptive Totzeitregelung und Progression ermöglicht.

Die Erfindung ist insbesondere einsetzbar in Kombination mit einer Fahrgeschwindigkeitsregler-Einrichtung, wobei die Bedieneinheit 19 vorzugsweise die bei einem Fahrgeschwindigkeitsregler vorhandene "Minustaste" ersetzen kann.

Gemäß einer weiter bevorzugten Ausführungsform der Erfindung kann in Kombination mit einem Fahrgeschwindigkeitsregler- und/oder ACC-System das Fahrpedal wie eine Fußstütze benutzt werden, wobei beim Ausüben einer erhöhten Losbrechkraft (Force-Feedback-Pedal) der gesamte Pedalweg für das Fahrpedal zur Verfügung steht.

Die Erfindung verbessert den Komfort und die Sicherheit beim Führen eines Fahrzeugs und erlaubt insbesondere ein entspannteres Fahren im Kolonnenverkehr, ein ermüdungsfreieres Fahren, vor allem auf Autobahnen, dadurch daß weniger Umstiege zwischen Fahr- und Bremspedal erforderlich sind. Außerdem ermöglicht sie eine Erweiterung der Fahrgeschwindigkeitsregler-Funktion und die Ausbildung eines Fahrpedals wie eine Fußstütze.

## Patentansprüche

1. Vorrichtung mit einem Bremssystem für ein Fahrzeug, das beim Niederdrücken eines Bremspedals (1) eine entsprechende Bremswirkung erzeugt, und einer Bedieneinrichtung (19) zum manuellen Einstellen einer Sollverzögerung, die in einer Wirkverbindung mit einem Fahrpedal steht, wobei beim Lösen des Fahrpedals das Bremssystem das Fahrzeug entsprechend der manuell eingestellten Sollverzögerung bremst.

2. Vorrichtung nach Anspruch 1, wobei die Bedieneinrichtung (19) ein Einstellrad aufweist und vorzugsweise am Lenkrad oder Schaltknauf des Fahrzeuges angeordnet ist oder einen Lenkstockhebel aufweist.

3. Vorrichtung nach Anspruch 1 oder 2, wobei das Bremssystem ein Hydroaggregat (10) oder einen regelbaren Bremskraftverstärker mit einem Steuergerät (20) aufweist, wobei die Bedieneinrichtung (19) einen Sollwert vorzugsweise als elektrisches Signal liefert, das von dem Steuergerät (20) in eine entsprechende Sollverzögerung umgewandelt wird.

4. Vorrichtung nach einem der vorstehenden Ansprüche, mit einer Einrichtung (22, 23, 24, 25) zum Erfassen einer Istverzögerung des Fahrzeugs und einem Vergleicher, der die Sollverzögerung mit der Istverzögerung vergleicht und abhängig vom Vergleichsergebnis den Bremsdruck nachregelt.

5. Vorrichtung nach einem der vorstehenden Ansprüche, mit Bremsleuchten (17, 18), die direkt oder vorzugsweise über ein zweites Steuergerät (16) beim Betätigen der Bedieneinrichtung (19) angesteuert werden.

6. Vorrichtung nach einem der vorstehenden Ansprüche, mit einer Einrichtung zum Deaktivieren der Sollverzögerung, wenn das Bremspedal (1) betätigt wird, oder das Fahrpedal erneut betätigt wird.

7. Vorrichtung nach einem der vorstehenden Ansprüche, mit einer Einrichtung zum Begrenzen des Einstellbereichs für die Sollverzögerung.

8. Vorrichtung nach einem der vorstehenden Ansprüche, mit einer Einrichtung zum Umstellen von einer Regelung einer Fahrzeugverzögerung auf eine Regelung eines Bremsdrucks vorzugsweise abhängig von einer Fahrzeuggeschwindigkeit, besonders bevorzugt bei einer Fahrzeuggeschwindigkeit kleiner 15 km/h.

9. Vorrichtung nach einem der vorstehenden Ansprüche, mit einer Einrichtung zum Aufrechterhalten eines Bremsdrucks beim Fahrzeugstillstand, bei Betätigung der Bedieneinheit (19).

10. Vorrichtung nach einem der vorstehenden Ansprüche, mit einer Einrichtung zum Speichern mindestens jeweils einer Aufbaukurve für den Bremsdruck in Abhängigkeit von einem Parameter, vorzugsweise einer Fahrzeuggeschwindigkeit und/oder Querbeschleunigung des Fahrzeugs und/oder einer Geschwindigkeit, mit der die Bedieneinheit (19) betätigt wird, wobei die Aufbaukurve einer einstellbaren Sollverzögerung entspricht.

11. Vorrichtung nach einem der vorstehenden Ansprüche, mit einer Einrichtung zum Erfassen einer fahrzeugspezifischen Aufbaukurve für den Bremsdruck.

12. Vorrichtung nach einem der vorstehenden Ansprüche, mit einer Einrichtung zur Geschwindigkeitsregelung, vorzugsweise einem Fahrgeschwindigkeitsregler, wobei die Bedieneinheit (19) gleichzeitig eine Einstelleinrichtung für die Geschwindigkeitsregelung bildet.

13. Vorrichtung nach einem der vorstehenden Ansprüche, wobei das Fahrpedal in einer einstellbaren Betriebsweise einen begrenzten Pedalweg aufweist und als Fußstütze verwendbar ist, und wobei durch Überwinden einer bestimmten Losbrechkraft der gesamte Pedalweg vorhanden ist.

## Claims

1. A device with a braking system for a vehicle, which, when a brake pedal (1) is depressed, produces a corresponding braking effect, and with an operating mechanism (19) for the manual adjustment of a desired deceleration, which is in an operative connection with an accelerator pedal, wherein, when the accelerator pedal is released, the braking system brakes the vehicle according to the manually adjusted desired deceleration.

2. A device according to claim 1, wherein the operating mechanism (19) has an adjusting wheel and is preferably arranged at the steering wheel or gear shift knob of the vehicle or has a steering drop arm.

3. A device according to claim 1 or 2, wherein the braking system has a hydraulic unit (10) for a controllable power brake unit with a control unit (20), wherein the operating mechanism (19) supplies a desired value, preferably as an electric signal, which is converted by the control unit (20) into a corresponding desired deceleration.

4. A device according to any one of the preceding claims, comprising a mechanism (22, 23, 24, 25) for detecting an actual deceleration of the vehicle and a comparator, which compares the desired deceleration with the actual deceleration and, as a function of the result of the comparison, readjusts the brake pressure.

5. A device according to any one of the preceding claims, with brake lights (17, 18), which are activated directly or preferably by means of a second control unit (16) on actuation of the operating mechanism (19).

6. A device according to any one of the preceding claims, with a mechanism for deactivating the desired deceleration, when the brake pedal (1) is actuated, or the accelerator pedal is actuated again.

7. A device according to any one of the preceding claims, with a mechanism for limiting the adjusting range for the desired deceleration.

8. A device according to any one of the preceding claims, with a mechanism for changing from a controlling of a vehicle deceleration to a controlling of a brake pressure, preferably as a function of a vehicle speed, especially preferably at a vehicle speed of less than 15 km/h.

9. A device according to any one of the preceding claims, with a mechanism for maintaining a brake pressure when the vehicle is stopped, while actuating the operating unit (19).

10. A device according to any one of the preceding claims, with a mechanism for storing at least one respective build-up curve for the brake pressure as a function of a parameter, preferably a vehicle speed and/or lateral acceleration of the vehicle and/or a speed at which the operating unit (19) is actuated, the build-up curve corresponding to an adjustable desired deceleration.

11. A device according to any one of the preceding claims, with a mechanism for detecting a vehicle-specific build-up curve for the brake pressure.

12. A device according to any one of the preceding claims, with a mechanism for speed control, preferably a cruise control, wherein the operating unit (19) simultaneously forms an adjusting mechanism for the cruise control.

13. A device according to any one of the preceding claims, wherein the accelerator pedal has a limited pedal travel in an adjustable operating mode and can be used as a foot support, and wherein by overcoming a specific break-away force, the entire pedal travel is available.

## Revendications

1. Dispositif comportant un système de freins de véhicule générant une action de freinage selon l'enfoncement de la pédale de frein (1) ainsi qu'une installation de service (19) pour régler manuellement une décélération de consigne en coopération avec la pédale d'accélérateur qui, lorsqu'on la libère, fait que le système de freins freine le véhicule selon la décélération de consigne réglée manuellement.

2. Dispositif selon la revendication 1,
selon lequel
l'installation de service (19) comporte une molette de réglage et équipe de préférence le volant ou le levier de vitesses du véhicule ou un levier de direction.

3. Dispositif selon la revendication 1 ou 2,
selon lequel
le système de freins comporte une unité hydraulique (10) ou un servofrein réglable avec un appareil de commande (20), l'installation de service (19) fournissant une valeur de consigne, de préférence sous la forme d'un signal électrique, converti par l'appareil de commande (20) en une décélération de consigne correspondante.

4. Dispositif selon l'une des revendications précédentes, comportant une installation (22, 23, 24, 25) pour saisir la décélération réelle du véhicule ainsi qu'un comparateur qui compare la décélération de consigne et la décélération réelle et assure l'asservissement de la pression de frein en fonction du résultat de la comparaison.

5. Dispositif selon l'une des revendications précédentes, comportant des feux de frein (17, 18) commandés directement ou de préférence par l'intermédiaire d'un second appareil de commande (16) lorsque l'installation de service (19) est actionnée.

6. Dispositif selon l'une des revendications précédentes, comportant une installation pour neutraliser la décélération de consigne lorsque la pédale de frein (1) est actionnée ou lorsque la pédale d'accélérateur est de nouveau actionnée.

7. Dispositif selon l'une des revendications précédentes, comportant une installation pour limiter la plage de réglage de la décélération de consigne.

8. Dispositif selon l'une des revendications précédentes, comportant une installation pour convertir une régulation de décélération du véhicule en une régulation de pression de frein de préférence en fonction de la vitesse du véhicule et notamment pour des vitesses du véhicule inférieures à 15 km/h.

9. Dispositif selon l'une des revendications précédentes, comportant une installation pour maintenir la pression de frein à l'arrêt du véhicule lorsqu'on actionne l'unité de service (19).

10. Dispositif selon l'une des revendications précédentes, comportant une installation pour mémoriser au moins chaque fois une courbe de montée de la pression de frein en fonction d'un paramètre, de préférence d'une vitesse du véhicule et/ou d'une accélération transversale du véhicule et/ou d'une vitesse d'actionnement de l'unité de service (19), la courbe de montée correspondant à une décélération de consigne, réglable.

11. Dispositif selon l'une des revendications précédentes, comportant une installation pour saisir une courbe de montée de la pression de frein, spécifique au véhicule.

12. Dispositif selon l'une des revendications précédentes, comportant une installation de régulation de vitesse, de préférence un régulateur de vitesse de roulage, l'unité de service (19) constituant en même temps l'installation de réglage assurant la régulation de la vitesse.

13. Dispositif selon l'une des revendications précédentes,
selon lequel
la pédale de frein a une course limitée selon un mode de fonctionnement réglable et peut servir de repose-pied et en dépassant une certaine force de rupture, toute la course de la pédale est disponible.
